# EUROPEAN PATENT APPLICATION

(11) **EP 0 930 677 A2**
(43) Date of publication of application: **21.07.1999**
(21) Application number: 99300291.4
(22) Date of filing: 15.01.1999
(51) Int. Cl.: H01S 3/06

(54) **Direct optical amplifier**

(30) Priority: 16.01.1998 JP 2050798
(71) Applicant: NEC CORPORATION, Tokyo (JP)
(72) Inventor: Okazaki, Hideya, Minato-ku, Tokyo (JP)
(74) Representative: Moir, Michael Christopher

(57) **Abstract**

A direct optical amplifier to amplify multiplexed wavelength lights are provided. The amplifier comprises: a gain equalizing filter; a wavelength changing filter which outputs individual wavelengths of lights from the multiplexed wavelength lights output from the gain equalizing filter; an O/E converter which converts the output of the wavelength changing filter into corresponding electric signals; and a control circuit which controls the gain equalizing filter dependent upon the electric signals so that the levels of the individual wavelengths of lights become the same. The direct optical amplifier can adjust the levels of the lights into the same level even when the levels of any wavelengths of lights change.

## Description

### BACKGROUND OF THE INVENTION

### Field of the Invention

The present invention relates to a direct optical amplifier and control method thereof. It specifically relates to a direct optical amplifier which amplifies multiplexed wavelength lights and the control method of the output levels.

### Description of the Related Art

The conventional direct optical amplifiers, amplifying multiplexed wavelength lights, comprise a rare-earth-doped fiber, a pumping laser, and an optical coupler which allows a pumping light, output by the pumping laser, to enter the rare-earth-doped fiber. For long-distance transmission, most direct optical amplifiers amplify the multiplexed wavelength lights attenuated in the optical transmission channel. Wherein, the wavelength dependence with the direct optical amplifier makes differences in gain for each wavelength. The differences in gain become larger as the multiplexed wavelength lights are amplified by the direct optical amplifier. To prevent this, the direct optical amplifier comprises a gain equalizing filter to compensate for the wavelength dependence, in general. The gain equalizing filter has a characteristic value predetermined for compensation of the wavelength dependence with the direct optical amplifier, and is set so that a constant value for each wavelength is output. Therefore, it is impossible to adjust the intensity of a specific wavelength of light, which has been attenuated, due to an occurrence of a failure in the system.

Incidentally, a direct optical amplifier which controls the output level of each signal light into a constant when there is a change in the number of the signal lights to be wavelength-multiplexed, has been disclosed in Japanese Patent Application Laid-open No. Hei-8-255944 or Japanese Patent Application Laid-Open No. Hei-8-248457. In the direct optical amplifier, a narrow band wavelength changing filter selects a specific wavelength of signal light out of the wavelength multiplexed signal lights amplified and output by the direct optical amplifier. The direct optical amplifier is controlled based upon the level of the signal light selected. However, it is impossible for the direct optical amplifier to adjust the level of each wavelength of light.

### Summary of the Invention

Accordingly, the objective of the present invention is to provide a direct optical amplifier and control method thereof, which can control the output levels of individual wavelengths so that the output levels become equal to one another even when the level of a specific wavelength of a signal is changed by a failure or other related problems in the system.

In a first aspect, the present invention provides a direct optical amplifier comprising:
a gain equalizing filter for receiving amplified wavelength multiplexed light signals;
a wavelength changing filter for outputting individual wavelength light signals from the wavelength multiplexed light signals output from said gain equalizing filter; and
a control circuit for controlling said gain equalizing filter depending upon the individual wavelengths of the light signals output from said wavelength changing filter.

The direct optical amplifier may also comprise an optical branching filter which branches the wavelength multiplexed light signals output from the gain equalizing filter; and also an O/E converter which converts the light signals output from the wavelength changing filter into electric signals.

In a second aspect, the present invention provides a method of controlling a direct optical amplifier comprising a gain equalizing filter and a wavelength changing filter; said method comprising the steps of receiving at gain equalizing filter amplified wavelength multiplexed light signal, outputting from the wavelength changing filter individual wavelength light signals from the wavelength multiplexed light signals, and controlling the gain equalizing filter depending on the individual wavelengths of the light signals output from the wavelength changing filter.

In a third aspect, the present invention provides a method of controlling a direct optical amplifier, comprising the steps of branching amplified, wavelength multiplexed light signals, separating the amplified, wavelength multiplexed light signals into individual wavelength light signals and outputting the individual wavelength light signals, monitoring the individual wavelength light signals, and controlling a gain equalizing filter dependent upon the monitoring result so that the levels of the individual wavelength light signals become the same.

The separated, individual wavelength light signals may be converted into corresponding electric signals and monitored. Other details of the configuration are shown in the description that follows and in the drawings. The direct optical amplifier can control the output level of each wavelength of light. Therefore, even if the levels of some wavelengths of signal lights go up or down, they can be adjusted so that the output levels of respective wavelengths of lights become the same.

### BRIEF DESCRIPTION OF THE DRAWINGS

Preferred features of the present invention will now be described, purely by way of example only, with reference to the accompanying drawings, in which:-
Fig. 1 is a block diagram showing the configuration of the conventional direct optical amplifier;
FIG. 2 is a block diagram showing a direct optical amplifier according to the present invention;
FIGS. 3A, 3B, and 3C are graphs showing functions of a variable gain equalizing filter;
FIGS. 4A, 4B, and 4C show the output spectrum feature of the direct optical amplifier, the operation of a wavelength changing filter control circuit, and the wave form of the output from an O/E converter; and
FIGS 5A, 5B and 5C show the output spectrum feature of the direct optical amplifier, the operation of the wavelength changing filter control circuit, and the wave form of the output from the O/E converter, respectively, in the normal operation.

### DETAILED DESCRIPTION OF THE PREFERRED EMBODIMENTS

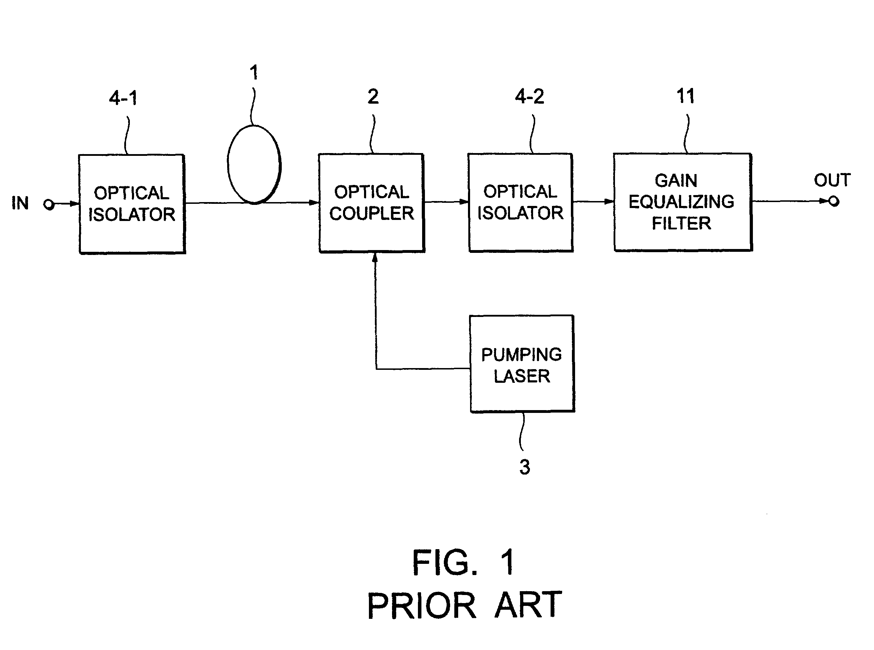

The conventional direct optical amplifier shown in FIG. 1, comprises an optical isolator 4-1 on the input side of a rare-earth-doped fiber 1, and optical coupler 2, which couples with a pumping light transmitted from a pumping laser 3, on the output side. The signal light amplified in the rare-earth-doped fiber 1 is output via the optical coupler 2, an optical isolator 4-2, and a gain equalizing filter 11. However, since the conventional gain equalizing filter 11 compensates the wavelength dependence of the direct optical amplifier as a whole, it is impossible to compensate possible level changes of a specific wavelength.

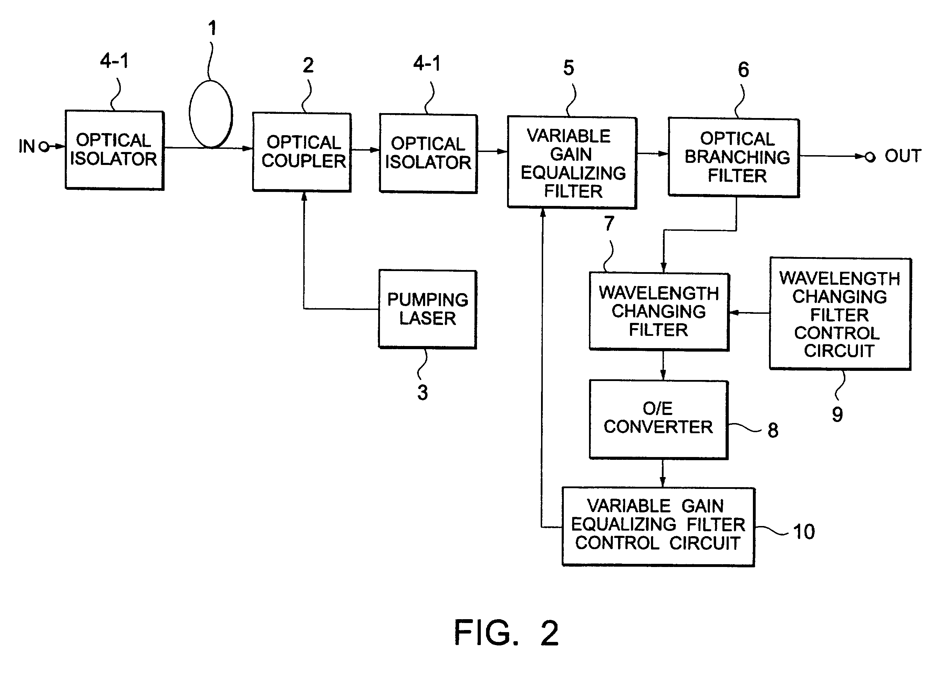

In the direct optical amplifier, according to the present invention shown in FIG. 2, the optical coupler 2 is placed on the output side of the rare-earth-doped fiber 1, coupling a pumping light transmitted from the pumping laser 3. Also, the optical isolator 4-1 is placed on the input side of the rare-earth-doped fiber 1, and the optical isolator 4-2 is placed on the output side of the optical coupler 2. The multiplexed wavelength lights output from the optical isolator 4-2 enters the variable gain equalizing filter 5, and are then branched into individual wavelengths of lights by the optical branching filter 6. The multiplexed wavelength lights branched are then selected for each wavelength by the wavelength changing filter 7. The O/E converter 8 converts the output from the wavelength changing filter 7 into corresponding electric signal for each wavelength, transmitting the resulting electric signal to the variable gain equalizing filter control circuit 10. The variable gain equalizing filter control circuit 10 controls the variable gain equalizing filter 5 in conformity with the electric signal received. The wavelength changing filter control circuit 9, connected to both the wavelength changing filter 7 and the variable gain equalizing filter control circuit 10, controls these units.

For the wavelength changing filter 7, a well-known device with a multiple layers feature can be utilized, for example. The variable gain equalizing filter 5 changes both the filtering center wavelength and a loss at the filtering center wavelength into desired values, respectively. The variable gain equalizing filter 5 comprises two AGWs (Arrayed Waveguide Gratings ). The first AGW is used to branch the amplified, multiplexed wavelength lights into individual wavelengths of signal lights. The individual wavelengths of signal lights is then compared to a reference value, and the level of the signal light is adjusted by a variable optical attenuator (not shown ). The second AGW is used to couple the lights with individual wavelengths adjusted to their levels, and transmit the resulting lights to a transmission channel. Alternately, in another variable gain equalizing filter, an optical circulator branches the multiplexed wavelength signal lights. An AGW then selects them for each wavelength and couples the signals adjusted in their levels for each wavelength. The coupled multiplexed wavelength lights are transmitted from the circulator to the transmission channel.

The operation of the direct optical amplifier is described below. Multiplexed wavelength signal lights with wavelengths λ1 to λn are amplified by the rare-earth-doped fiber 1 and then branched by the optical branching filter 6. The wavelength changing filter 7 inputs the branched, multiplexed wavelength signal lights in conformity with the operation signal output from the wavelength changing filter control circuit 9, selects signal lights with wavelengths λ1 to λn, and allows them to penetrate filter 7. The O/E converter 8 converts the signal lights with each wavelength into electric signals. The variable gain equalizing filter control circuit 10 detects the electric signals in sync of the operation signal output from the wavelength changing filter control circuit 9. The variable gain equalizing filter control circuit 10 controls penetrative center wavelengths and their losses so that the levels P1 to Pn of the electric signals corresponding to respective, detected wavelengths λ1 to λn become the same. For example, it can control the wavelength with the lowest level and adjust the levels of the other wavelengths accordingly.

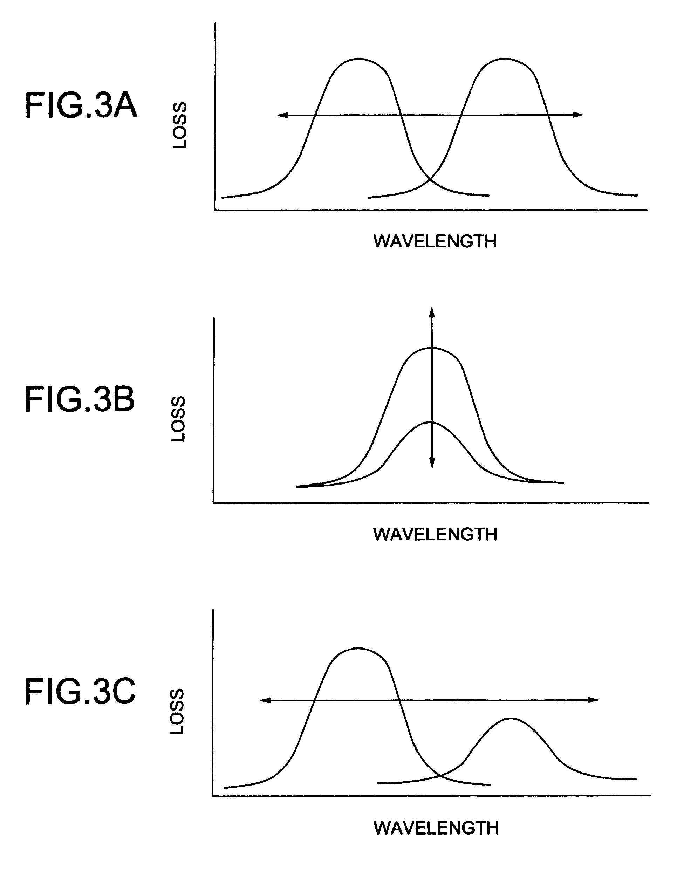

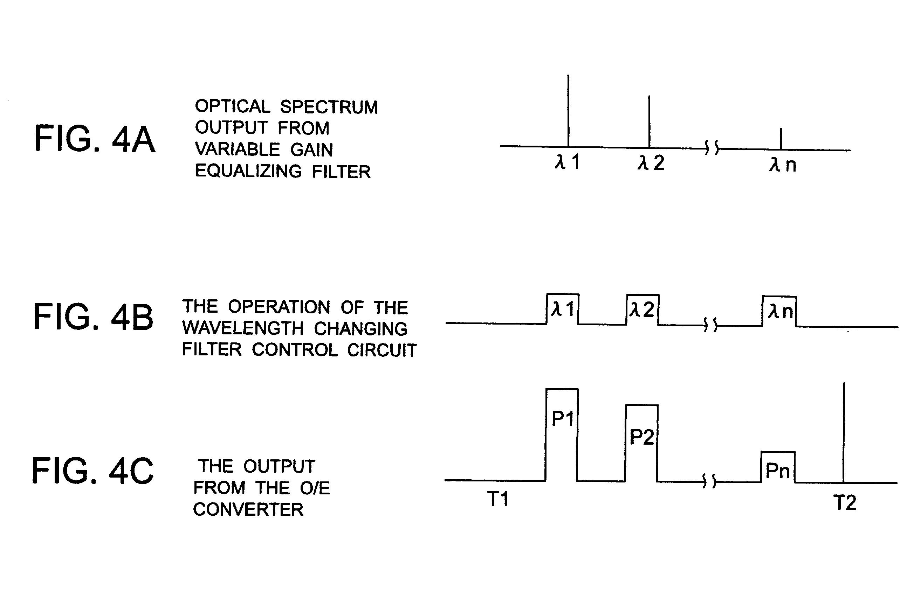

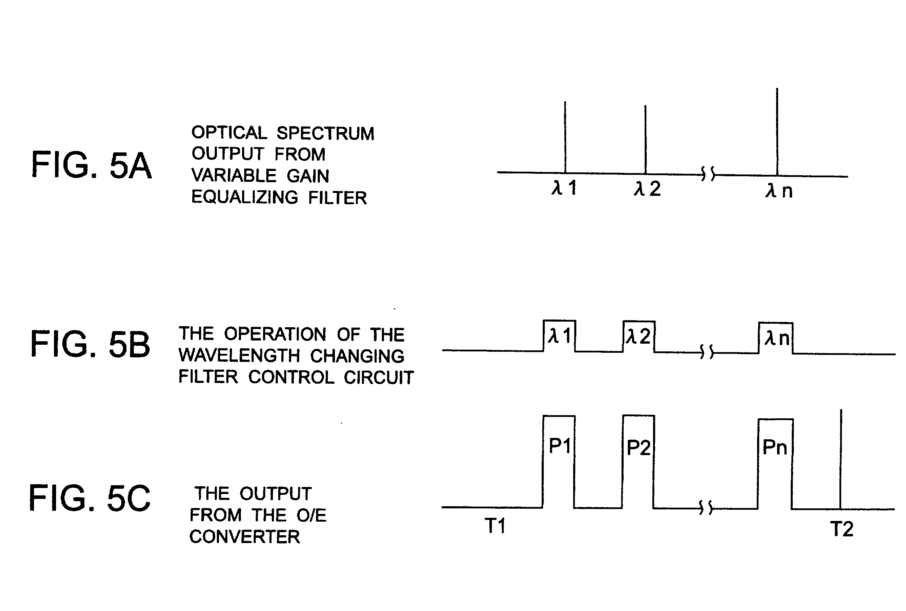

The operation of filtering by the variable gain equalizing filter 5 is shown in FIGS. 3A to 3C. The variable gain equalizing filter 5 can change the loss at the penetrative center wavelength (see FIG. 3A). Also, it can change the loss at the penetrative center wavelength (see FIG. 3B). FIG. 3C shows the case where both the wavelength and its loss are changed. When the multiplexed wavelength lights are normally transmitted, the levels of the signal lights with their wavelengths λ1 to λn output from the variable gain equalizing filter 5 are the same (see FIG. 5A). Accordingly, the levels of the electric signals P1 to Pn, output from the O/E converter 8 in conformity with the control signal (see FIG. 5B) output from the wavelength changing filter control circuit, are the same (see FIG. 5C). Therefore, the variable gain equalizing filter control circuit 10 controls the variable gain equalizing filter 5 to keep the current state. As shown in FIGS. 4A to 4C, when the levels of the wavelengths λ1 to λn output from the variable gain equalizing filter 5 become different, the electric signals P1 to Pn output from the O/E converter 8 become different. In this case, the variable gain equalizing filter control circuit 10 controls the penetrative center wavelengths and their losses so that P1 to Pn become the same.

The direct optical amplifier can be configured with n variable gain equalizing filters connected in series. The n variable gain equalizing filters correspond to respective wavelengths λ1 to λn, with a simple configuration.

The direct optical amplifier described above can control each of the output levels of the multiplexed wavelength lights with respective wavelengths. Therefore, even when some signal levels are changed by a failure in the system, the output levels of respective wavelengths are controlled to become the same.

While the present invention has been described in connection with certain preferred embodiments, it is understood that the subject matter encompassed by the present invention is not limited to those specific embodiments. On the contrary, it is intended to include all alternatives, modifications, and equivalents as can be included within the scope of the following claims.

Each feature disclosed in this specification (which term includes the claims) and/or shown in the drawings may be incorporated in the invention independently of other disclosed and/or illustrated features.

Statements in this specification of the "objects of the invention" relate to preferred embodiments of the invention, but not necessarily to all embodiments of the invention falling within the claims.

The description of the invention with reference to the drawings is by way of example only.

The text of the abstract filed herewith is repeated here as part of the specification.

A direct optical amplifier to amplify multiplexed wavelength lights are provided. The amplifier comprises: a gain equalizing filter; a wavelength changing filter which outputs individual wavelengths of lights from the multiplexed wavelength lights output from the gain equalizing filter; an O/E converter which converts the output of the wavelength changing filter into corresponding electric signals; and a control circuit which controls the gain equalizing filter dependent upon the electric signals so that the levels of the individual wavelengths of lights become the same. The direct optical amplifier can adjust the levels of the lights into the same level even when the levels of any wavelengths of lights change.

## Claims

1. A direct optical amplifier comprising:
a gain equalizing filter for receiving amplified wavelength multiplexed light signals;
a wavelength changing filter for outputting individual wavelength light signals from the wavelength multiplexed light signals output from said gain equalizing filter; and
a control circuit for controlling said gain equalizing filter depending upon the individual wavelengths of the light signals output from said wavelength changing filter.

2. A direct optical amplifier according to Claim 1, further comprising an optical branching filter for branching the wavelength multiplexed light signals output from said gain equalizing filter.

3. A direct optical amplifier according to Claim 1 or 2, further comprising a converter for receiving the individual wavelength light signals output from said wavelength changing filter and converting them into electric signals.

4. A direct optical amplifier according to any preceding claim, further comprising means for controlling said wavelength changing filter.

5. A direct optical amplifier according to any preceding claim, wherein said control circuit controls a centre wavelength and its loss.

6. A direct optical amplifier according to any preceding claim, wherein said control circuit controls the gain equalizing filter so that the levels of the individual wavelength light signals become the same.

7. A method of controlling a direct optical amplifier comprising a gain equalizing filter and a wavelength changing filter; said method comprising the steps of:
receiving at the gain equalizing filter amplified wavelength multiplexed light signals;
outputting from the wavelength changing filter individual wavelength light signals from the wavelength multiplexed light signals; and controlling the gain equalizing filter depending on the individual wavelengths of the light signals output from the wavelength changing filter.

8. A method according to Claim 7, comprising the steps of:
branching amplified, wavelength multiplexed light signals;
separating the amplified wavelength multiplexed light signals into individual wavelength light signals;
monitoring the individual wavelength light signals; and
controlling the gain equalizer filter so that the levels of the individual wavelength light signals are the same.

9. A method of controlling a direct optical amplifier, comprising the steps of:
branching amplified, wavelength multiplexed light signals;
separating the amplified, wavelength multiplexed light signals into individual wavelength light signals and outputting the individual wavelength light signals;
monitoring the individual wavelength light signals; and
controlling a gain equalizing filter dependent upon the monitoring results so that the levels of the individual wavelength light signals become the same.

10. A method according to Claim 8 or 9, further comprising the steps of converting the separated, individual wavelength light signals into respective electric signals and monitoring the electric signals.
